# FASCICULE DE BREVET EUROPEEN

(11) **EP 0 743 435 B1**
(45) Date de publication et mention de la délivrance du brevet: **08.09.1999**
(21) Numéro de dépôt: 96400937.7
(22) Date de dépôt: 02.05.1996
(51) Int. Cl.: F02C 7/18, F02C 6/08

(54) **Dispositif pour prélever et refroidir de l'air chaud au niveau d'un moteur d'aéronef**
Vorkühlungswärmetauscher, integriert mit stromlinienförmiger Befestigungsvorrichtung einer Gasturbine
Precooling heat exchange arrangement integral with mounting structure fairing of gas turbine engine

(30) Priorité: 15.05.1995 FR 9505704
(43) Date de publication de la demande: 20.11.1996
(73) Titulaire: AEROSPATIALE SOCIETE NATIONALE INDUSTRIELLE, 75016 Paris (FR)
(72) Inventeur: Porte, Alain, 31770 Colomiers (FR)
(74) Mandataire: Bonnetat, Christian

(56) Documents cités:
- EP-A- 0 469 825
- EP-A- 0 469 827
- US-A- 3 475 906
- US-A- 5 363 641

## Description

La présente invention concerne un moteur d'aéronef pourvu d'un dispositif pour prélever et refroidir de l'air chaud.

Pour assurer, en particulier, le conditionnement d'air à bord d'un aéronef, il est connu de prélever de l'air au niveau des compresseurs des moteurs de l'aéronef (turboréacteurs notamment, plus particulièrement turboréacteurs "double flux"). Une certaine quantité d'air chaud et sous pression est ainsi prélevée à la sortie des compresseurs basse pression et/ou haute pression du turboréacteur. Provenant de ces différentes sources, l'air doit traverser différents organes de commande (vannes pilotées par des thermostats, notamment) avant de pouvoir être mélangé et dosé, après quoi il est nécessaire de le refroidir une première fois (prérefroidissement) avant de l'acheminer vers les organes utilisateurs : groupe de conditionnement d'air, système de dégivrage, etc ...

Jusqu'à présent, dans tous les cas, l'air de refroidissement est prélevé en aval du ventilateur (soufflante) du moteur avant d'être dirigé vers l'échangeur thermique de prérefroidissement, ce qui présente l'inconvénient plus ou moins prononcé de détériorer les performances du moteur. En effet, l'échangeur thermique (air/air) de prérefroidissement est, de façon connue, généralement installé dans le mât qui supporte le réacteur, reliant la voilure à ce dernier, au niveau de la partie supérieure du mât à proximité du bord d'attaque de la voilure. L'air chaud sous pression provenant de différents étages du moteur est refroidi par l'air provenant de la soufflante, qui traverse l'échangeur et est ensuite rejeté à la partie supérieure du mât. Un dispositif de ce type est illustré par EP-A-0 469 825.

Il en résulte une ponction d'un débit important d'air qui ne participe plus à la poussée du moteur. Par ailleurs, le rejet de l'air de refroidissement à l'extérieur engendre des turbulences, des traînées et des perturbations aérodynamiques.

La présente invention a pour but d'éviter ces inconvénients et concerne un moteur d'aéronef pourvu d'un dispositif pour prélever et refroidir de l'air chaud au niveau dudit moteur, ledit dispositif étant agencé de façon à récupérer un maximum de la pression dynamique, sans provoquer de perturbations aérodynamiques.

A cet effet, le moteur d'aéronef pourvu d'un dispositif pour prélever et refroidir de l'air chaud et comprenant :
- un corps de moteur présentant des compresseurs, chambres de combustion et turbines,
- une soufflante disposée en amont du corps de moteur,
- un carénage comportant, d'amont en aval dans le sens d'écoulement de l'air provenant de la soufflante, une entrée d'air, un carter de soufflante et des carénages externe et interne de la veine d'air provenant de la soufflante,
- des bras de liaison entre le corps de moteur et le carter de soufflante, et
- un mât de support du moteur, relié, d'une part, à celui-ci et, d'autre part, à la voilure,
ledit dispositif étant du type comportant :
- au moins une prise d'air chaud à la sortie des étages basse pression et/ou haute pression des compresseurs du moteur,
- une prise d'air froid en aval de la soufflante du moteur,
- un échangeur thermique de prérefroidissement entre ledit air chaud et ledit air froid, et
- des vannes de commande des débits d'air,
est caractérisé, selon l'invention, en ce que ledit échangeur thermique de prérefroidissement comprend au moins un desdits bras de liaison entre le corps de moteur et le carter de soufflante, ledit ou lesdits bras de liaison, jouant le rôle d'échangeur, présentant une structure creuse longitudinalement traversée par au moins une partie de l'air chaud prélevé à la sortie des étages basse pression et/ou haute pression des compresseurs du moteur.

Ainsi, la présente invention, grâce à sa conception ci-dessus définie, permet, en particulier, de récupérer de la poussée en réinjectant l'air de ventilation de l'échangeur (bras de liaison) dans l'air du flux secondaire du moteur (veine d'air froid), et de limiter, sinon supprimer, l'encombrement important dû aux écopes, canalisations, grilles de sortie, qui déterminent les dimensions du mât ou de l'habillage du moteur.

Avantageusement, ledit échangeur thermique de prérefroidissement comporte une pluralité desdits bras de liaison, angulairement répartis en plusieurs groupes. En particulier, quatre desdits groupes de bras peuvent être prévus, angulairement espacés l'un de l'autre d'au moins sensiblement 90°.

Selon une première variante du moteur selon l'invention, chacun desdits bras échangeurs, en service, est traversé exclusivement par l'air chaud, prélevé à la sortie des étages basse pression et/ou haute pression des compresseurs du moteur, circulant du corps de moteur vers le carter de soufflante.

Selon une seconde variante du moteur selon l'invention, chacun desdits bras échangeurs, en service, est longitudinalement traversé, à contre-courant, par le flux d'air chaud circulant du corps de moteur vers le carter de soufflante et par le flux d'air froid provenant de la soufflante.

Dans ce dernier cas, chacun desdits bras présente, avantageusement, un cloisonnement interne à l'intérieur duquel circule, en service, ledit flux d'air froid.

Plus particulièrement, chaque bras peut présenter alors une section transversale profilée, correspondant sensiblement à la section d'une "aile d'avion", ledit cloisonnement s'inscrivant dans ce profil, en présentant une section transversale sensiblement en forme de losange, augmentant la surface d'échange thermique.

Selon une autre caractéristique de l'invention, le moteur comprend une première canalisation de prélèvement d'air chaud au niveau des compresseurs basse pression et/ou haute pression du moteur, ladite canalisation présentant une première dérivation menant auxdits bras jouant le rôle d'échangeur et une seconde dérivation traversant transversalement le moteur et rejoignant ladite première dérivation pour former une seconde canalisation menant aux moyens utilisateurs.

En particulier, ladite première dérivation peut présenter différentes branches menant aux différents groupes de bras jouant le rôle d'échangeur thermique, différentes branches correspondantes, en sortie desdits bras, se réunissant en un conduit relié à ladite seconde canalisation.

Selon encore une autre caractéristique de l'invention, une vanne est prévue dans ladite première et/ou dans ladite seconde dérivation, pilotée par des thermostats, agencés sur ladite seconde canalisation, pour réguler le flux d'air chaud provenant des compresseurs.

Les figures du dessin annexé feront bien comprendre comment l'invention peut être réalisée. Sur ces figures, des références identiques désignent des éléments semblables.

La figure 1 est une vue en coupe longitudinale schématique d'un moteur d'aéronef, montrant un exemple de réalisation de la présente invention.

La figure 2 est une coupe transversale selon la ligne II-II de la figure 1.

La figure 3 est une vue semblable à la figure 1, montrant une variante du moteur de l'invention.

La figure 4 est une section transversale d'un bras de liaison, jouant le rôle d'échangeur thermique, de la variante de la figure 3.

La figure 5 montre la liaison d'un bras échangeur selon l'invention entre le corps de moteur et le carter de soufflante.

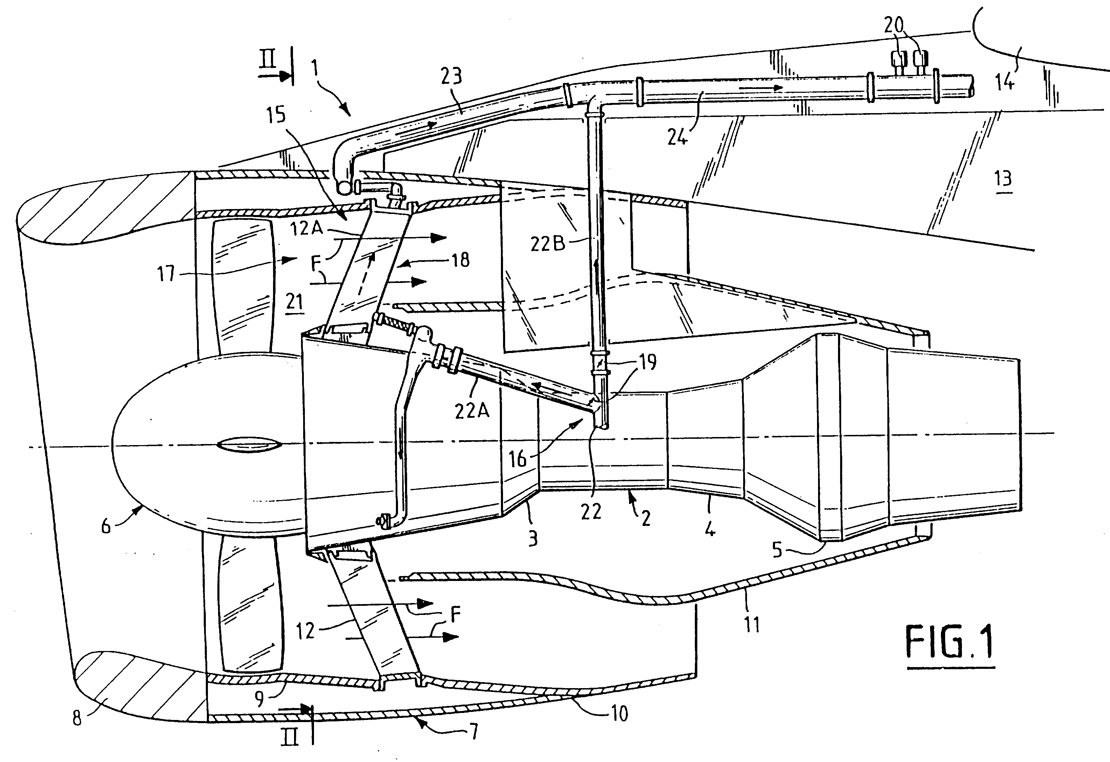

En premier lieu, il convient de décrire l'agencement général du moteur d'aéronef 1 représenté notamment sur la figure 1.

Le turboréacteur "double flux" montré comprend :
- un corps de moteur 2 présentant des compresseurs 3, chambres de combustion 4 et turbines 5,
- une soufflante 6 (ou ventilateur) disposée en amont du corps de moteur 2 et reliée à celui-ci,
- un carénage 7 comportant, d'amont en aval dans le sens d'écoulement de l'air provenant de la soufflante 6, une entrée d'air 8, un carter de soufflante proprement dit 9 et des carénages externe 10 et interne 11 de la veine d'air froid,
- des bras de liaison 12 entre le corps de moteur 2 et le carter de soufflante 9, et
- un mât de support 13 du moteur 1, relié, d'une part, à celui-ci et, d'autre part, à la voilure 14.

On notera que le carénage interne 11 du flux secondaire (veine d'air froid) contient, en plus du corps de moteur 2, des organes auxiliaires, tels que des pompes, alternateurs, régulateurs, notamment, qui sont refroidis par un flux d'air qui parcourt ce compartiment d'amont en aval.

Par ailleurs, le dispositif 15 pour prélever et refroidir de l'air chaud au niveau du moteur 1 de l'aéronef comporte :
- une prise d'air chaud 16 à la sortie des étages basse pression et/ou haute pression des compresseurs 3 du moteur,
- une prise d'air froid 17 en aval de la soufflante 6 du moteur,
- un échangeur thermique 18 de prérefroidissement entre l'air chaud et l'air froid, et
- des vannes de commande 19 des débits d'air, commandées, par exemple, par des thermostats 20.

Plus particulièrement, selon l'invention, l'échangeur thermique de prérefroidissement 18 comprend certains (12A) des bras de liaison 12 entre le corps de moteur 2 et le carter de soufflante 9, lesdits bras de liaison 12A, jouant le rôle d'échangeur, présentant une structure creuse longitudinalement traversée (flèche en traits interrompus sur la figure 1) par au moins une partie de l'air chaud prélevé à la sortie des étages basse pression et/ou haute pression des compresseurs 3 du moteur 2 (prise d'air chaud 16).

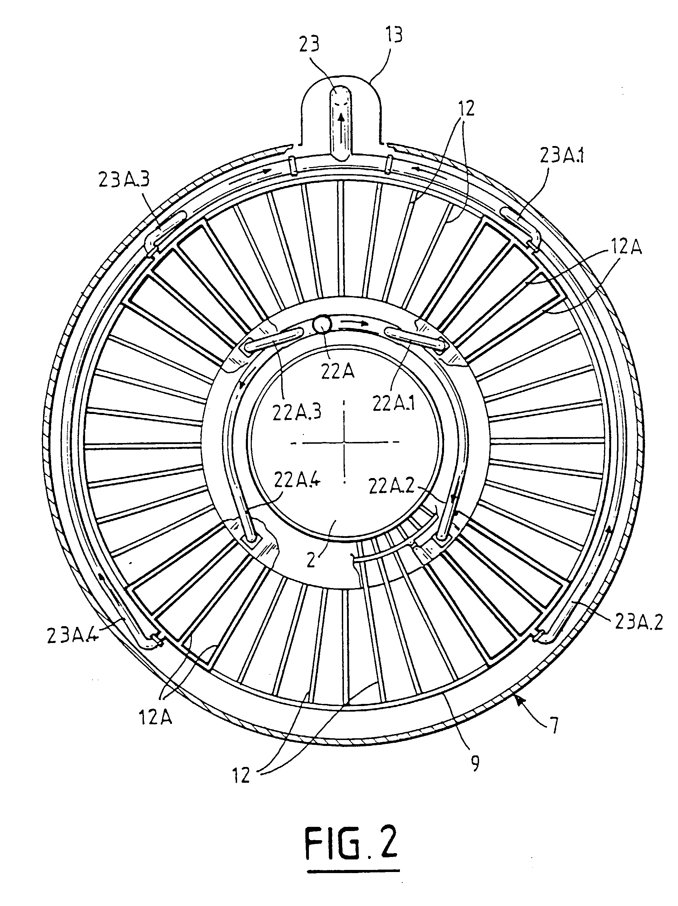

Comme on le voit sur la figure 2, les bras 12A sont, avantageusement, répartis en quatre groupes, angulairement espacés les uns des autres de 90°, cette répartition assurant un meilleur échange thermique entre l'air chaud circulant, dans chacun desdits bras 12A, du corps de moteur 2 vers le carter de soufflante 9, et la veine d'air froid 21 provenant de la soufflante 6. A titre d'exemple, chaque groupe de bras 12A peut comprendre quatre bras, comme montré sur la figure 2.

Par ailleurs, les bras 12A conservent leur rôle structurel de liaison mécanique entre le carter de soufflante 9 et le corps de moteur 2, ainsi, bien entendu, que les bras 12 restants.

Comme on le voit de plus sur la figure 1, il est prévu une première canalisation 22 de prélèvement d'air chaud au niveau des compresseurs basse pression et/ou haute pression du moteur, ladite canalisation 22 présentant une première dérivation 22A, dont différentes branches 22A.1, 22A.2, 22A.3, 22A.4 (figure 2) mènent aux différents groupes de bras 12A jouant le rôle d'échangeur thermique. En sortie desdits bras, différentes branches correspondantes 23A.1, 23A.2, 23A.3, 23A.4 (figure 2) se réunissent en un conduit 23 s'étendant dans le mât 13 vers la voilure 14. Une seconde dérivation 22B de la canalisation 22, traversant transversalement le moteur 1, rejoint ce conduit 23 pour former une seconde canalisation 24, munie des thermostats 20, menant aux moyens utilisateurs (non représentés). En outre, une vanne 19 peut être prévue dans la dérivation 22A et/ou la dérivation 22B, pilotée par les thermostats 20, permettant de réguler le flux d'air chaud provenant des compresseurs, tandis que la ventilation d'air froid (flèches F) demeure permanente.

Dans une première variante du moteur selon l'invention, illustrée notamment sur la figure 1, chaque bras creux 12A, en service, est traversé exclusivement par l'air chaud, prélevé à la sortie des étages basse pression et/ou haute pression des compresseurs du moteur, circulant du corps de moteur 2 vers le carter de soufflante 9. Comme on le voit sur la figure 1 (flèches F), l'air de ventilation passe alors simplement entre les bras 12A jouant le rôle d'échangeur thermique et ressort, "naturellement", entre les carénages externe 10 et interne 11 de la veine d'air froid.

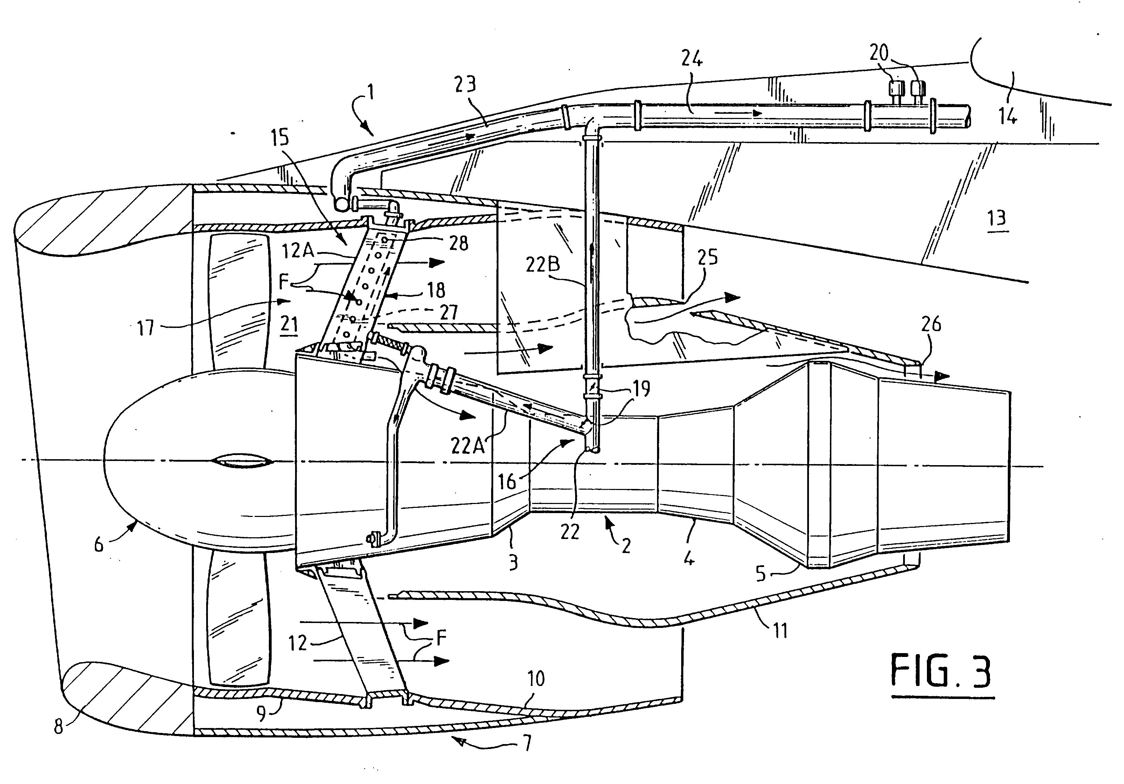

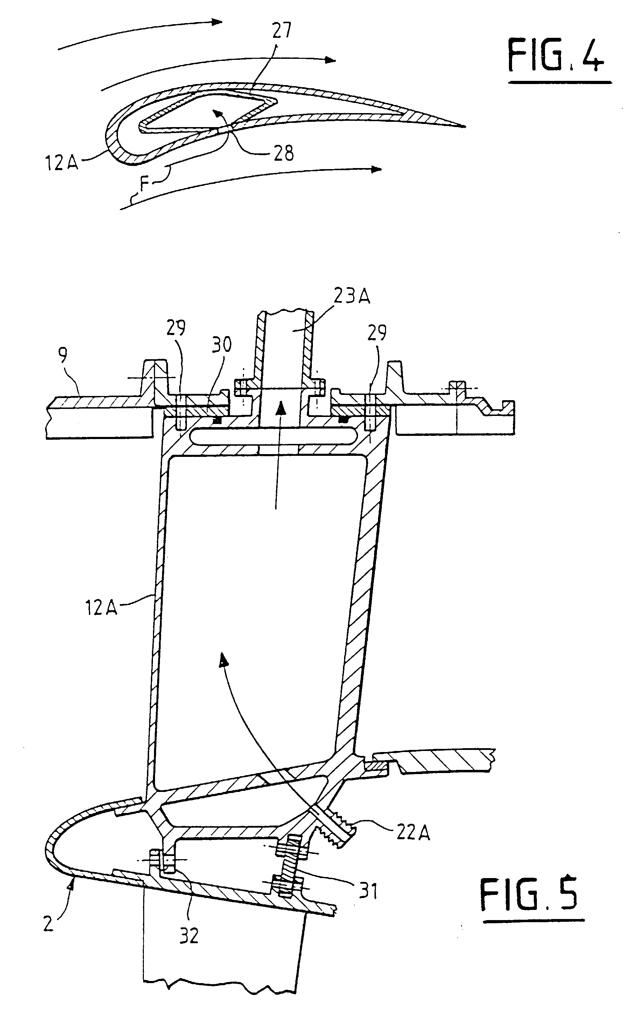

En revanche, selon une seconde variante du moteur de l'invention, illustrée par les figures 3 et 4, chaque bras creux 12A, en service, est longitudinalement traversé, à contre-courant, par le flux d'air chaud circulant du corps de moteur 2 vers le carter de soufflante 9 et par le flux d'air froid provenant de la soufflante 6. L'air de ventilation traversant ainsi les bras 12A ressort du carénage interne 11 par les sorties 25 et 26 prévues, respectivement, au niveau des chambres de combustion 4 et des turbines 5, afin de rejoindre la veine d'air froid.

Dans ce dernier cas, chaque bras 12A peut présenter, comme représenté, un cloisonnement interne 27, relié à l'extérieur du bras 12A par des trous 28, à l'intérieur duquel circule, en service, le flux d'air froid (figure 4). Sur cette figure 4, on voit également que, le bras 12A présentant une section transversale profilée, correspondant sensiblement à la section d'une "aile d'avion", le cloisonnement 27 s'inscrit dans ce profil, en présentant une section transversale sensiblement en forme de losange, augmentant la surface d'échange thermique. Bien entendu, le flux d'air chaud circule, dans le bras 12A, à l'extérieur du cloisonnement 27. D'autres configurations seraient bien sûr possibles, notamment une configuration inversée par rapport à celle décrite précédemment concernant la circulation ("externe" ou "interne") des flux d'air froid et d'air chaud.

On notera de plus que l'agencement général de la variante des figures 3 et 4 ne diffère par ailleurs pas de l'agencement décrit en regard des figures 1 et 2.

En outre, les bras 12A, ou groupes de bras, sont de préférence fixés de manière isostatique avec comme point de référence le carter extérieur. La liaison d'un bras 12A entre le corps de moteur 2 et le carter de soufflante 9 est illustrée sur la figure 5, cette liaison devant tenir compte des contraintes thermiques auxquelles le bras 12A est soumis en service (dilatations notamment).

Ainsi, comme on le voit sur la figure 5, le bras 12A, réalisé conformément à l'une ou l'autre des variantes précédemment décrites, présente, d'une part, au niveau de ses moyens de fixation 29 au carter de soufflante 9, une isolation thermique et anti-friction 30 et, d'autre part, au niveau de sa fixation au corps de moteur 2, une biellette de liaison 31 d'un côté et, de l'autre, des moyens de fixation 32 associés à une rondelle anti-friction et à un jeu pour la dilatation thermique.

Par ailleurs, les bras 12A étant ainsi fixés à l'intérieur du carter de soufflante, cela procure les avantages suivants :
- le carter de soufflante continu est percé seulement pour évacuer l'air vers la canalisation 24 ou fixer les bras 12, 12A ;
- une fuite éventuelle de l'air secondaire vers l'extérieur est limitée au maximum ;
- la référence du ou des bras échangeurs 12A est fournie par des "pièces froides".

## Revendications

1. Moteur d'aéronef pourvu d'un dispositif pour prélever et refroidir de l'air chaud et comprenant :
- un corps de moteur (2) présentant des compresseurs (3), chambres de combustion (4) et turbines (5),
- une soufflante (6) disposée en amont du corps de moteur (2),
- un carénage (7) comportant, d'amont en aval dans le sens d'écoulement de l'air provenant de la soufflante (6), une entrée d'air (8), un carter de soufflante (9) et des carénages externe (10) et interne (11) de la veine d'air provenant de la soufflante,
- des bras de liaison (12) entre le corps de moteur (2) et le carter de soufflante (9), et
- un mât de support (13) du moteur (1), relié, d'une part, à celui-ci et, d'autre part, à la voilure (14),
ledit dispositif étant du type comportant :
- au moins une prise d'air chaud (16) à la sortie des étages basse pression et/ou haute pression des compresseurs (3) du moteur (1),
- une prise d'air froid (17) en aval de la soufflante (6) du moteur (1),
- un échangeur thermique de prérefroidissement (18) entre ledit air chaud et ledit air froid, et
- des vannes (19) de régulation des débits d'air,
caractérisé en ce que ledit échangeur thermique de prérefroidissement (18) comprend au moins un (12A) desdits bras de liaison (12) entre le corps de moteur (2) et le carter de soufflante (9), ledit ou lesdits bras de liaison (12A), jouant le rôle d'échangeur, présentant une structure creuse longitudinalement traversée par au moins une partie de l'air chaud prélevé à la sortie des étages basse pression et/ou haute pression des compresseurs (3) du moteur.

2. Moteur selon la revendication 1,
caractérisé en ce que ledit échangeur thermique de prérefroidissement (18) comporte une pluralité desdits bras de liaison (12A), angulairement répartis en plusieurs groupes.

3. Moteur selon la revendication 2,
caractérisé en ce que quatre desdits groupes de bras (12A) sont prévus, angulairement espacés l'un de l'autre d'au moins sensiblement 90°.

4. Moteur selon l'une quelconque des revendications 1 à 3,
caractérisé en ce que chacun desdits bras échangeurs (12A), en service, est traversé exclusivement par l'air chaud, prélevé à la sortie des étages basse pression et/ou haute pression des compresseurs (3) du moteur, circulant du corps de moteur (2) vers le carter de soufflante (9).

5. Moteur selon l'une quelconque des revendications 1 à 3,
caractérisé en ce que chacun desdits bras échangeurs (12A), en service, est longitudinalement traversé, à contre-courant, par le flux d'air chaud circulant du corps de moteur (2) vers le carter de soufflante (9) et par le flux d'air froid provenant de la soufflante (6).

6. Moteur selon la revendication 5,
caractérisé en ce que chacun desdits bras (12A) présente un cloisonnement interne (27) à l'intérieur duquel circule, en service, ledit flux d'air froid.

7. Moteur selon la revendication 6,
caractérisé en ce que chaque bras (12A) présente une section transversale profilée, correspondant sensiblement à la section d'une "aile d'avion", ledit cloisonnement (27) s'inscrivant dans ce profil, en présentant une section transversale sensiblement en forme de losange, augmentant la surface d'échange thermique.

8. Moteur selon l'une quelconque des revendications 1 à 7,
caractérisé en ce qu'il comprend une première canalisation (22) de prélèvement d'air chaud au niveau des compresseurs (3) basse pression et/ou haute pression du moteur, ladite canalisation (22) présentant une première dérivation (22A) menant auxdits bras (12A) jouant le rôle d'échangeur et une seconde dérivation (22B) traversant transversalement le moteur et rejoignant ladite première dérivation pour former une seconde canalisation (24) menant aux moyens utilisateurs.

9. Moteur selon la revendication 8,
caractérisé en ce que ladite première dérivation (22A) présente différentes branches (22A.1 - 22A.4) menant aux différents groupes de bras (12A) jouant le rôle d'échangeur thermique, différentes branches correspondantes (23A.1 - 23A.4), en sortie desdits bras, se réunissant en un conduit (23) relié à ladite seconde canalisation (24).

10. Moteur selon la revendication 8 ou la revendication 9,
caractérisé en ce qu'une vanne (19) est prévue dans ladite première (22A) et/ou dans ladite seconde (22B) dérivation, pilotée par des thermostats (20), agencés sur ladite seconde canalisation (24), pour réguler le flux d'air chaud provenant des compresseurs (3).

## Patentansprüche

1. Flugzeugtriebwerk mit einer Vorrichtung zur Entnahme und Kühlung von Heißluft und mit:
- einem Triebwerksgehäuse (2) mit Verdichtern (3), Brennkammern (4) und Turbinen(5),
- einem Gebläse (6) vor dem Triebwerksgehäuse (2),
- einer Wandung (7), die, von vorne bis hinten in der Strömungsrichtung der Luft aus dem Gebläse (6), ein Lufteintritt (8), ein Gebläsegehäuse (9) und eine Außenwandung (10) und eine Innenwandung (11) für den Luftstrom aus dem Gebläse hat,
- Verbindungsarmen (12) zwischen dem Triebwerksgehäuse (2) und dem Gebläsegehäuse (9) und
- einem Träger (13) des Triebwerks (1), der einerseits mit dem Triebwerk und andererseits mit dem Tragwerk (14) verbunden ist,
wobei die Vorrichtung derart ist, daß sie umfaßt:
- mindestens einen Heißluftanschluß (16) am Ausgang der Nieder- und/oder Hochdruckstufen der Verdichter (3) des Triebwerks (1),
- einen Kaltluftanschluß (17) hinter dem Gebläse (6) des Triebwerks (1),
- einen Wärmetauscher zur Vorkühlung (18) zwischen Heiß- und Kaltluft und
- Ventile (19) zur Regelung der Luftdurchsätze,
dadurch gekennzeichnet, daß der Wärmetauscher zur Vorkühlung (18) mindestens einen (12A) der Verbindungsarme (12) zwischen dem Triebwerksgehäuse (2) und dem Gebläsegehäuse (9) umfaßt, wobei der oder die als Wärmetauscher fungierenden Verbindungsarme (12A) eine Hohlstruktur aufweisen, durch die in Längsrichtung mindestens ein Teil der Heißluft aus dem Ausgang der Nieder- und/oder Hochdruckstufen der Verdichter (3) des Triebwerks strömt.

2. Triebwerk nach Anspruch 1,
dadurch gekennzeichnet, daß der Wärmetauscher zur Vorkühlung (18) eine Vielzahl von Verbindungsarmen (12A) hat, die auf mehrere Gruppen verteilt in einem bestimmten Winkel zueinander angeordnet sind.

3. Triebwerk nach Anspruch 2,
dadurch gekennzeichnet, daß vier dieser Armgruppen (12A) in einem Winkelabstand zueinander von mindestens etwa 90° angeordnet sind.

4. Triebwerk nach einem der Ansprüche 1 bis 3,
dadurch gekennzeichnet, daß bei Betrieb durch jeden Wärmetauscherarm (12A) ausschließlich vom Triebwerksgehäuse (2) zum Gebläsegehäuse (9) zirkulierende Heißluft aus dem Ausgang der Nieder- und/oder Hochdruckstufen der Triebwerksverdichter (3) strömt.

5. Triebwerk nach einem der Ansprüche 1 bis 3,
dadurch gekennzeichnet, daß bei Betrieb durch jeden Wärmetauscherarm (12A) in Längsrichtung der vom Triebwerksgehäuse (2) zum Gebläsegehäuse (9) zirkulierende Heißluftstrom und im Gegenstrom dazu der Kaltluftstrom aus dem Gebläse (6) strömt.

6. Triebwerk nach Anspruch 5,
dadurch gekennzeichnet, daß jeder Arm (12A) eine innere Unterteilung (27) hat, in der bei Betrieb der Kaltluftstrom zirkuliert.

7. Triebwerk nach Anspruch 6,
dadurch gekennzeichnet, daß jeder Arm (12A) ein Querschnittsprofil hat, das etwa dem Querschnitt eines Flugzeugflügels entspricht, wobei die Unterteilung (27) innerhalb dieses Profils angeordnet ist und einen etwa rautenförmigen Querschnitt aufweist, durch den sich die Wärmeaustauscherfläche vergrößert.

8. Triebwerk nach einem der Ansprüche 1 bis 7,
dadurch gekennzeichnet, daß es eine erste Leitung (22) zur Heißluftentnahme im Bereich der Nieder- und/oder Hochdruckverdichter (3) des Triebwerks hat, wobei die Leitung (22) eine erste Abzweigung (22A) zu den als Wärmetauscher fungierenden Armen (12A) und eine zweite Abzweigung (22B) hat, die quer durch das Triebwerk verläuft und zusammen mit der ersten Abzweigung eine zweite Leitung (24) zu den Einsatzmitteln bildet.

9. Triebwerk nach Anspruch 8,
dadurch gekennzeichnet, daß die erste Abzweigung (22A) verschiedene Stränge (22A.1 - 22A.4) zu den als Wärmetauscher fungierenden Armgruppen hat, wobei mehrere entsprechende Stränge (23A.1 - 23A.4) am Ausgang der Arme zu einer Leitung (23) zusammengefaßt werden, die mit der zweiten Leitung (24) verbunden ist.

10. Triebwerk nach Anspruch 8 oder Anspruch 9,
dadurch gekennzeichnet, daß in der ersten (22A) und/oder in der zweiten (22B) Abzweigung ein Ventil (19) vorgesehen ist, das durch Thermostate (20) gesteuert wird, die in der zweiten Leitung (24) angeordnet sind, um den Heißluftstrom aus den Verdichtern (3) zu regeln.

## Claims

1. Aircraft engine provided with a device for bleeding off and cooling hot air and comprising:
- an engine body (2) having compressors (3), combustion chambers (4) and turbines (5),
- a fan (6) arranged upstream of the engine body (2),
- a fairing (7) including, from upstream downwards in the direction of flow of the air coming from the fan (6), an air intake (8), a fan shroud (9) and outer (10) and inner (11) fairings of the airstream coming from the fan,
- linking arms (12) between the engine body (2) and the fan shroud (9), and
- an engine support pylon (13), linked, on the one hand, to the engine (1) and, on the other hand, to the wings (14),
the said device being of the type including:
- at least one hot air take-off (16) at the outlet of the low pressure and/or high pressure stages of the compressors (3) of the engine (1),
- a cold air take-off (17) downstream of the fan (6) of the engine (1),
- a precooling heat exchanger (18) between the said hot air and the said cold air, and
- air flow regulation valves (19),
characterized in that the said precooling heat exchanger (18) comprises at least one (12A) of the said linking arms (12) between the engine body (2) and the fan shroud (9), the said linking arm or arms (12A) acting as the exchanger, exhibiting a hollow structure traversed longitudinally by at least some of the hot air bled off at the output of the low pressure and/or high pressure stages of the compressors (3) of the engine.

2. Engine according to Claim 1, characterized in that the said precooling heat exchanger (18) includes a plurality of the said linking arms (12A), angularly distributed into several groups.

3. Engine according to Claim 2, characterized in that four of the said groups of arms (12A) are provided, angularly spaced from one another by at least substantially 90°.

4. Engine according to any one of Claims 1 to 3, characterized in that each of the said exchanger arms (12A), in service, is traversed exclusively by the hot air, bled off at the output of the low pressure and/or high pressure stages of the compressors (3) of the engine, flowing from the engine body (2) towards the fan shroud (9).

5. Engine according to any one of Claims 1 to 3, characterized in that each of the said exchanger arms (12A), in service, is longitudinally traversed, against the current, by the hot air flowing from the engine body (2) towards the fan shroud (9) and by the cold air flow coming from the fan (6).

6. Engine according to Claim 5, characterized in that each of the said arms (12A) has an internal partitioning (27) within which, in service, the said cold air flows.

7. Engine according to Claim 6, characterized in that each arm (12A) exhibits a profiled cross section, corresponding substantially to the section of an "aircraft wing", the said partitioning (27) lying within this profile, exhibiting a substantially lozenge-shaped cross section, increasing the heat exchange surface area.

8. Engine according to any one of Claims 1 to 7, characterized in that it comprises a first trunking (22) for bleeding off hot air from the low pressure and/or high pressure compressors (3) of the engine, the said trunking (22) having a first tapping (22A) leading to the said arms (12A) acting as the exchanger and a second tapping (22B) passing transversely through the engine and rejoining the said first tapping so as to form a second trunking (24) leading to the user facilities.

9. Engine according to Claim 8, characterized in that the said first tapping (22A) has various branches (22A.1 - 22A.4) leading to the various groups of arms (12A) acting as the heat exchanger, various corresponding branches (23A.1 - 23A.4), at the exit from the said arms, joining together in a duct (23) linked to the said second trunking (24).

10. Engine according to Claim 8 or Claim 9, characterized in that a valve (19) is provided in the said first (22A) and/or in the said second (22B) tapping, controlled by thermostats (20), which are arranged on the said second trunking (24), in order to regulate the hot air flow coming from the compressors (3).
